(19) Europäisches Patentamt
European Patent Office
Office européen des brevets

(11) EP 3 769 936 B1

(12) **EUROPEAN PATENT SPECIFICATION**

(45) Date of publication and mention of the grant of the patent:
**07.09.2022 Bulletin 2022/36**

(21) Application number: **20201391.8**

(22) Date of filing: **12.10.2020**

(51) International Patent Classification (IPC):
***B29C 51/46*** *(2006.01)* ***B29C 51/42*** *(2006.01)*

(52) Cooperative Patent Classification (CPC):
**B29C 51/46; B29C 51/421**

(54) **CONTROL METHOD FOR A THERMOFORMING MACHINE**

STEUERUNGSVERFAHREN FÜR EINE THERMOFORMMASCHINE

PROCÉDÉ DE COMMANDE POUR UNE MACHINE DE THERMOFORMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2019 IT 201900019001**

(43) Date of publication of application:
**27.01.2021 Bulletin 2021/04**

(73) Proprietor: **C.M.S. S.p.A.**
**24019 Zogno (BG) (IT)**

(72) Inventor: **GAIAZZI, Fabio**
**21040 Sumirago (VA) (IT)**

(74) Representative: **Villanova, Massimo et al**
**Luppi Intellectual Property Srl**
**Viale Corassori, 54**
**41124 Modena (IT)**

(56) References cited:
**WO-A1-2012/140496**
**JP-A- H10 249 930**
**JP-A- 2015 087 341**
**JP-A- 2017 195 454**
**US-A1- 2005 243 892**
**US-A1- 2010 237 544**
**US-B2- 7 317 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 769 936 B1

## Description

The invention relates to a method for controlling heating elements.

The disclosure refers to a method for controlling heating elements included in a thermoforming machine and to a thermoforming machine configured for applying this method.

Thermoforming machines are known that are intended for thermoforming a product made of thermoplastics, for example in the form of a plate, sheet or film, to make finished products such as shells of suitcases, sports equipment, vehicle parts and the like. Such thermoforming machines comprise, *inter alia*, at least one mould, an upper heater and a lower heater. The upper and lower heaters each comprise a plurality of resistances, and are movable towards/away from one another to soften the product before forming by at least one mould.

One known control method for controlling the aforesaid resistances comprises setting, in a cycle startup step, on the basis of the experience of the operator, for each resistance of the heaters intended for heating a given zone of the product made of thermoplastics, a frequency percentage value for a certain period of time. Subsequently, after softening in this manner the product to be thermoformed, the product is thermoformed and the operator, on the basis of experience, performs a visual quality inspection of the product that has just been thermoformed and establishes which parts of the product have been too/too little heated during the first heating cycle. Subsequently, for a subsequent heating cycle, still on the basis of the aforesaid visual inspection, the operator adjusts the percentage frequency values of the resistances that, in his opinion, had heated too much/too little the corresponding zone of the product to be thermoformed. These operations, i.e. setting the frequency for each resistance, visual inspection of the product that has just been thermoformed, possible adjustment of the frequencies, are performed in succession by the operator for as many times as are necessary to obtain a visually satisfactory result. A control method like the one described can thus be defined as empirical-qualitative.

A method in accordance with the preamble of claim 1 is disclosed in JP2015087341A. Further related methods are disclosed in JPH10249930A, WO2012140496A1, US2010237544A1, US2005243892A1, US7317175B2 and JP2017195454A.

One drawback of the empirical-qualitative method described above is that the efficacy thereof is linked to the experience of the individual operator. An operator who is hardly capable or hardly expert will take more time to adjust the resistances of the heaters, or to adjust the correct frequency percentage to be applied to each resistance, this entailing a greater number of rejects with subsequent increase of costs.

Another drawback of the control method described above is that it is unable to ensure over time satisfactory qualitative stability of production. In fact, when work shifts change, different operators, with different capacity and experience, find themselves managing the thermoforming process, possibly not being aware of possible deviations of the process.

One object of the present invention is to improve the methods for controlling heating elements included in a thermoforming machine.

A further object is to provide a method for controlling heating elements included in a thermoforming machine that is effective regardless of the experience of the operator.

Another further object is to provide a method for controlling heating elements included in a thermoforming machine that enables qualitative production stability to be improved with respect to known methods.

Still another project is to improve thermoforming machines.

Such objects and still others are achieved by a method for controlling heating elements included in a thermoforming machine and by a thermoforming machine, as disclosed in one or more of the claims set out below.

The invention can be better understood and implemented with reference to the attached drawings that illustrate an embodiment thereof by way of non-limiting example, in which:

Figure 1 is a schematic front view of a thermoforming machine according to the invention;

Figure 2 is a schematic view of a graphic representation of heating elements included in the thermoforming machine of Figure 1; and

Figure 3 is a view like that of Figure 2 on which a thermal image has been superimposed that has been created by a thermal imaging camera included in the thermoforming machine of Figure 1.

With reference to Figure 1, a thermoforming machine 1 is shown that is intended for thermoforming a product 2 (shown by a dashed line in Figures 2 and 3), made of thermoplastics, for example in the form of a plate, sheet or film, to make finished products such as shells of suitcases, sports equipment, vehicle parts and the like.

In particular, the thermoforming machine 1, of known type, comprises, *inter alia*, a frame 3, at least one mould, which is not shown, an upper heater 4 and a lower heater 5. The upper and lower heaters 4, 5 each comprise a plurality of respective heating elements 8 (shown schematically in the shape of rectangles in Figures 2 and 3), for example comprising quartz or ceramic or halogen resistances, and are movable towards/away from one another to soften the product 2 before forming performed by at least one mould. In particular, in use, each heating element 8 is configured for heating, at each heating cycle, a corresponding zone, facing the heating element 8, of the product 2 to be thermoformed.

Also, the thermoforming machine 1 comprises a thermal imaging camera 6, for example of the infrared type, fixed to an upper portion of the frame 3, to detect, after each heating cycle, the temperatures of the zones of the product 2 that have just been heated, in particular softened, by the respective heating elements 8 and create a thermal image IT (Figure 3) of the product 2, as will be disclosed better below.

The thermoforming machine 1 further comprises a display 7, for example of touchscreen type, to display information of the thermoforming process and insert instructions on the forming process, a processing unit, which is not shown, to process the thermal image IT created by the thermal imaging camera 6 and storage means, which is not shown, to store the thermal image IT created by the thermal imaging camera 6.

In particular with reference to Figures 2 and 3, the control method of the heating elements 8 according to the present invention is disclosed.

Initially, as shown in Figure 2, the control method according to the invention creates a graphic representation RG of the heating elements 8 (for simplicity of representation and brevity of description, only the graphic representation RG of the heating elements 8 of the upper heater 4 is shown and disclosed, the description that follows applying also to the heating elements 8 of the lower heater 5), which is displayable on the display 7, such that with each heating element 8 of the upper heater 4 a zone of the product 2 facing the heating element 8 is shown, intended for being heated by a corresponding heating element 8. Subsequently, for each heating element, an initial power value RI is set, for example a percentage value of a frequency, which is adjustable for example through a PWM, so as to heat a corresponding zone of the product 2 and define an initial power distribution RI of each of this heating elements 8 on this product 2 and assign to each of these zones a respective initial power value RI. In Figure 2, an embodiment is shown in which a power value RI equal to 0% means that the corresponding heating element 8, and consequently the zone of the product 2 associated therewith, is not heated and in which to power values that are progressively greater than 0% is matched progressively a greater heating of the corresponding heating element 8 and thus of the zone of the product 2 associated therewith. Only this initially setting is performed on the basis of the experience of the operator and is used only as a point of reference for the subsequent heating cycles. In this manner, which is definable as a "setting", it is possible, on the basis of the set power value, to assign a different colour, which is not shown, to the graphic representation RG of the heating elements that is displayable on the display 7. For example, it is possible to assign the colour yellow where the power value RI is equal to 0%, and the colour red that gets more intense as the power value RI increases.

Also subsequently, the method according to the invention detects, for each successive heating cycle, for each of the aforesaid zones, a detected temperature value TA by the thermal imaging camera 6 included in the thermoforming machine 1. Also in this mode, which is definable as "reading" mode, it is possible to assign a different colour to the graphic representation RG of the heating elements. For example, it is possible to still assign the yellow colour where the power value RI is equal to 0%, and the colour green where the power value RI is greater than 0%. In this manner, in the graphic representation RG of each heating element 8 the respective set power value RI is shown, for example in a square at the top on the left.

Subsequently, the control method comprises creating by the thermal imaging camera 6, after each heating cycle, the thermal image IT of the product 2 that has just been heated so as to define a temperature distribution on the product 2 that has just been heated. This creating includes processing, by the processing unit, the thermal image IT so that it is a dimensional size that is superimposable on the graphic representation RG (Figure 3). Processing is conducted to take account of the distortion produced by the thermal imaging camera 6. After processing, the thermal image IT is shown as a coloured image containing thermal information (in the graphic representation of Figure 3, instead of the colours different dashes have been used). Also, both a thermal image IT that is not processed and the processed thermal image IT are saved in the storage means, for example a storage device included in the thermoforming machine 1 or a Cloud computing system connected to the thermoforming machine 1.

After the thermal image IT has been processed, it is possible, by clicking on an icon present on the display 7, to superimpose the icon on the graphic representation RG of the heating elements (Figure 3) so as to display how temperature distribution is correlated with the power distribution and assign, on the basis of this superimposing, to each of the aforesaid zones, a corresponding detected temperature value TA corresponding to a respective power value RI. In this manner, in the graphic representation RG of each heating element 8, in addition to the respective set power value RI, also, for example in a square at the top on the right, the detected temperature value TA corresponding to a corresponding power value RI is shown. It should be noted that the aforesaid detecting of a detected temperature value TA comprises calculating an average temperature value of the detected temperature values of a plurality of sample points, for example five, contained in each respective zone of the product 2 heated by a respective heating element 8. In this manner, for each heating cycle, there is direct information about the actual temperature of each zone of the product 2 and about the relation between power value and temperature. Naturally, the thermal images IT can be kept as proof of the quality of the heating cycles.

In order to increase production quality stability, it is possible to set an "automatic" mode of the thermoforming machine, by clicking on an icon on the display 7. In order to do so, the method sets, for each zone, an objective temperature value TRIF. In this mode, in the graphic representation RG of each heating element 8, in addition to the respective set power value RI and to the detected temperature value TA corresponding to a corresponding power value RI, also, for example in a square at the bottom on the right, the objective temperature value TRIF relating to the corresponding zone is shown. The objective temperature values TRIF can be stored to be used as objective values for future production. In "automatic" mode, the control method compares, after each heating cycle, each of the objective temperature values TRIF with the respective detected temperature value TA, calculates a temperature difference between each of the objective temperature values TRIF and the respective detected temperature value TA and, if this temperature difference is not comprised between an objective interval, calculates by the formula:

$$R\% = S + (CR * (TRIF - TA)$$

$$RMIN \leq R\% \leq RMAX$$

a power value R% calculated to be applied to each of the heating elements 8 in the subsequent heating cycle.

In particular, in the formula:

- S is a coefficient linked to the configuration (dimensions, ...) of the thermoforming machine 1;
- CR is a coefficient relating to the type of resistance used (quartz, ceramic, halogen);
- RMIN and RMAX indicate the minimum and maximum values within which the calculated power value R% must be comprised.

Also, in "automatic" mode, in the graphic representation RG of each heating element 8, in addition to the respective set power value RI, the detected temperature value TA corresponding to a corresponding power value RI, the objective temperature value TRIF relating to the corresponding zone, also, for example in a square at the bottom on left, the calculated power value R% to be applied "automatically" to each of the heating elements 8 in the subsequent heating cycle are shown. In particular, the objective interval is equal to the objective temperature TRIF ± 3°C, in particular ± 2°C. also, on the basis of the temperature difference calculated between each of the objective temperature values TRIF and the respective detected temperature value TA, different colouring is assigned to the graphic representation RG of the heating elements 8 displayed on the display 7. For example, if the temperature difference calculated between an objective temperature value TRIF and the respective detected temperature value TA, is greater than or the same as +10°C, the respective graphic representation RG of the heating element 8 will turn red, if the temperature difference calculated between an objective temperature value TRIF and the respective detected temperature value TA, is comprised between +3°C and +10°C, the respective graphic representation RG of the heating element 8 will turn orange, if the temperature difference calculated between an objective temperature value TRIF and the respective detected temperature value TA, is comprised in the objective interval of ± 2°C the respective graphic representation RG of the heating element 8 will turn green, or if the temperature difference calculated between an objective temperature value TRIF and the respective detected temperature value TA, is greater than or the same as -10°C, the respective graphic representation RG of the heating element 8 will turn dark blue, and lastly, if the temperature difference calculated between an objective temperature value TRIF and the respective detected temperature value TA, is comprised between -3°C and - 10°C, the respective graphic representation RG of the heating element 8 will turn light blue. The objective of the "automatic" mode is to obtain in the lesser number of subsequent heating cycles, and to maintain over time, the graphic representations RG of each heating element 8 coloured green.

It should be noted how, by applying the control method according to the invention, it is not necessary to have expert personnel to minimize the time required to regularize the heating cycle. In fact, owing to the "automatic" mode, just a few heating cycles are necessary, if necessary just one, before optimum heating conditions are reached. This naturally helps to reduce the number of rejects with consequent reduction of production costs.

Also, "automatic" mode enables production quality to be kept constant over time to ensure at the same time reproducibility of the process parameters.

## Claims

**1.** Control method for controlling heating elements (8) said method comprising the steps of:

- **providing a thermoforming machine (1) configured for thermoforming a product (2) made of thermoplastics, said thermoforming machine (1) comprising heating elements (8);**
- creating a graphic representation (RG) of said heating elements (8), such that with each heating element (8) a zone of said product (2) is associated intended for being heated by a corresponding heating element (8);
- setting, for each heating element (8), a power value (RI) so as to heat a corresponding zone of said product (2) and define a power distribution on said product (2);
- assigning to each of said zones a respective power value (RI);
- detecting, preferably at each heating cycle, for each of said zones, a detected temperature value (TA) by a thermal imaging camera (6) included in said thermoforming machine (1);
- creating by said thermal imaging camera (6), preferably after each heating cycle, a thermal image (IT) of said product (2) that has just been heated so as to define a temperature distribution on said product (2) that has just been heated;

**characterized by comprising the step of**

- superimposing said thermal image (IT) on said graphic representation (RG) so as to display how said temperature distribution is correlated with said power distribution.

**2. Control method according to claim 1, comprising the step of**

- assigning, on the basis of said superimposition, to each of said zones, a relative detected temperature value (TA) corresponding to a respective said method power value (RI).

**3.** Control method according to claim 2, and further comprising:

- setting, for each of said zones, a target temperature value (TRIF);
- comparing, preferably after each heating cycle, each of said target temperature values (TRIF) with a respective detected temperature value (TA);
- calculating a temperature difference between each of said target temperature values (TRIF) and the respective detected temperature value (TA) and if said temperature difference is not comprised in a target range, calculating by the formula

$$R\% = S + (CR * (TRIF - TA)$$

$$RMIN \leq R\% \leq RMAX$$

(S = coefficient linked to the configuration of the thermoforming machine (1); CR = coefficient relating to the type of heating element (8); RMIN and RMAX = minimum and maximum power values within which the power value R% must fall)
a calculated power value (R%) to be applied to each of said heating elements (8) in a subsequent heating cycle.

**4.** Control method according to claim **1, or** 2, or 3, wherein said creating said thermal image (IT) comprises processing said thermal image (IT) so that it is in a dimensional format that is superimposable on said graphic representation (RG).

**5.** Control method according to one of claims **1** to 4, wherein after said creating there is provided saving said thermal image (IT) in a storage device included in said thermoforming machine (1).

**6.** Control method according to one of claims **1** to 4, wherein after said creating there is provided saving said thermal image (IT) in a Cloud computing system.

**7.** Control method according to one of claims 1 to 6, wherein said detecting a detected temperature value (TA) comprises calculating an average temperature value between the detected temperature values of a plurality of sample points contained in each respective zone of said product (2) heated by a respective heating element (8).

**8.** Control method according to claim 3, or according to one of claims 4 to 7 as appended to claim 3, wherein said target range is equal to the target temperature (TRIF) ± 3°C, in particular ± 2°C.

**9.** Control method according to claim 3, or according to one of claims 4 to 7 as appended to claim 3, or according to claim 8, wherein on the basis of said temperature difference calculated between each of said target temperature values (TRIF) and the respective detected temperature value (TA), there is provided assigning a different colour to the graphic representation (RG) of said heating elements (8).

**10.** Control method according to claim 1, wherein said heating elements (8) are resistances and said power value (RI) is a percentage value of a frequency of each of said resistances.

**Patentansprüche**

**1.** Steuerungsverfahren zum Steuern von Heizelementen (8), wobei das Verfahren die Schritte aufweist:

- Vorsehen einer Thermoformmaschine (1), die konfiguriert ist zum Thermoformen eines Produkts (2) aus Thermoplasten, wobei die Thermoformmaschine (1) Heizelemente (8) umfasst;
- Erzeugen einer graphischen Darstellung (RG) der Heizelemente (8), derart, dass mit jedem Heizelement (8) eine Zone des Produkts (2) in Zusammenhang steht, die vorgesehen ist, um über ein entsprechendes Heizelement (8) beheizt zu werden;
- Einstellen eines Leistungswerts (RI) für jedes Heizelement (8), um eine entsprechende Zone des Produkts (2) zu beheizen und eine Leistungsverteilung auf dem Produkt (2) zu definieren;

- Zuordnen eines entsprechenden Leistungswerts (RI) zu jeder der Zonen;
- Erfassen eines erfassten Temperaturwerts (TA) mit Hilfe einer Wärmebildkamera (6), die in der Thermoformmaschine (1) beinhaltet ist, vorzugsweise für jede der Zonen bei jedem Heizzyklus;
- Erzeugen eines Wärmebilds (IT) des Produkts (2), das gerade beheizt wurde über die Wärmebildkamera (6) vorzugsweise nach jedem Heizzyklus, um eine Temperaturverteilung auf dem Produkt (2) zu definieren, das gerade beheizt wurde;

**gekennzeichnet durch den Schritt des**

- Überlagerns des Wärmebilds (IT) auf die graphische Darstellung (RG), um zu zeigen, wie die Temperaturverteilung mit der Leistungsverteilung korreliert.

2. Steuerungsverfahren nach Anspruch 1, umfassend den Schritt des

- Zuordnens jeder der Zonen eines relativen, erfassten Temperaturwerts (TA), der einem jeweiligen Leistungswert (RI) entspricht, basierend auf der Überlagerung.

3. Steuerungsverfahren nach Anspruch 2, ferner aufweisend:

- Einstellen je eines Zieltemperaturwerts (TRIF) für jede der Zonen;
- Vergleichen, vorzugsweise nach jedem Heizzyklus, jeden der Zieltemperaturwerte (TRIF) mit einem jeweiligen, erfassten Temperaturwert (TA);
- Berechnen einer Temperaturdifferenz zwischen jedem der Zieltemperaturwerte (TRIF) und dem jeweiligen erfassten Temperaturwert (TA) und, falls die Temperaturdifferenz nicht in einem Zielbereich liegt, berechnen durch die Formel

$$R\% = S + (CR^* (TRIF - TA)$$

$$RMIN \leq R\% \leq RMAX$$

(S= ein Koeffizient, der in Verbindung steht mit der Konfiguration der Thermoformmaschine (1); CR = ein Koeffizient der in Bezug steht zu dem Typ des Heizelements (8); RMIN und RMAX = minimale und maximale Leistungswerte, innerhalb derer der Leistungswert R% fallen muss)
einen berechneten Leistungswert (R%), der jedem der Heizelemente (8) in einem folgenden Heizzyklus auferlegt werden muss.

4. Steuerungsverfahren nach Anspruch 1 oder 2 oder 3, wobei das Erzeugen des Wärmebilds (IT) eine Bearbeitung des Wärmebilds (IT) umfasst, derart, dass es in einem abmessungsmäßigen Format ist, das auf die graphische Darstellung (RG) überlagerbar ist.

5. Steuerungsverfahren nach einem der Ansprüche 1-4, wobei nach der Erzeugung ein Aufheben des Wärmebilds (IT) in einer Speichervorrichtung vorgesehen ist, die in der Thermoformmaschine beinhaltet ist.

6. Steuerungsverfahren nach einem der Ansprüche 1-4, wobei nach der Erzeugung ein Aufheben des Wärmebilds (IT) in einem Cloud-Rechnersystem vorgesehen ist.

7. Steuerungsverfahren nach einem der Ansprüche 1-6, wobei das Erfassen eines erfassten Temperaturwerts (TA) die Berechnung eines durchschnittlichen Temperaturwerts zwischen den erfassten Temperaturwerten mehrerer Prüfungspunkte umfasst, die in jeder jeweiligen Zone des Produkts (2) beinhaltet sind, die von einem jeweiligen Heizelement (8) beheizt wurde.

8. Steuerungsverfahren nach Anspruch 3 oder nach einem der Ansprüche 4-7, abhängig von Anspruch 3, wobei der Zielbereich gleich der Zieltemperatur (TRIF) ± 3°C, insbesondere ± 2°C ist.

9. Steuerungsverfahren nach Anspruch 3 oder nach einem der Ansprüche 4-7, abhängig von Anspruch 3 oder nach Anspruch 8, wobei auf der Basis der zwischen jedem der Zieltemperaturwerte (TRIF) und des jeweilen erfassten Temperaturwerts (TA) berechneten Temperaturdifferenz die Zuordnung einer anderen Farbe zu der graphischen Darstellung (RG) der Heizelemente (8) vorgesehen ist.

10. Steuerungsverfahren nach Anspruch 1, wobei die Heizelemente (8) Widerstände sind und der Leistungswert (RI) ein prozentualer Wert einer Frequenz jedes der Widerstände ist.

**Revendications**

1. Procédé de commande pour commander des éléments chauffants (8), ledit procédé comprenant les étapes de :

- obtention d'une machine de thermoformage (1) configurée pour thermoformer un produit (2) fait de thermoplastiques, ladite machine de thermoformage (1) comprenant des éléments chauffants (8) ;
- création d'une représentation graphique (RG) desdits éléments chauffants (8), de sorte qu'à chaque élément chauffant (8) soit associée une zone dudit produit (2) destinée à être chauffée par un élément chauffant (8) correspondant ;
- établissement, pour chaque élément chauffant (8), d'une valeur de puissance (RI) de manière à chauffer une zone correspondante dudit produit (2) et à définir une distribution de puissance sur ledit produit (2) ;
- attribution à chacune desdites zones d'une valeur de puissance respective (RI) ;
- détection, de préférence à chaque cycle de chauffage, pour chacune desdites zones, d'une valeur de température détectée (TA) par une caméra d'imagerie thermique (6) incluse dans ladite machine de thermoformage (1) ;
- création par ladite caméra d'imagerie thermique (6), de préférence après chaque cycle de chauffage, d'une image thermique (IT) dudit produit (2) qui vient juste d'être chauffé de manière à définir une distribution de température dudit produit (2) qui vient juste d'être chauffé ;

**caractérisé en ce qu'**il comprend l'étape de

- superposition de ladite image thermique (IT) sur ladite représentation graphique (TG) de manière à afficher comment ladite distribution de température est corrélée à ladite distribution de puissance.

**2.** Procédé de commande selon la revendication 1, comprenant l'étape de

- attribution, sur la base de ladite superposition, à chacune desdites zones, d'une valeur de température détectée relative (TA) correspondant à une valeur de puissance respective (RI).

**3.** Procédé de commande selon la revendication 2, comprenant en outre :

- l'établissement, pour chacune desdites zones, d'une valeur de température cible (TRIF) ;
- la comparaison, de préférence après chaque cycle de chauffage, de chacune desdites valeurs de température cibles (TRIF) avec une valeur de température détectée respective (TA) ;
- le calcul de la différence de température entre chacune desdites valeurs de température cible (TRIF) et la valeur de température détectée respective (TA) et, si ladite différence de température n'est pas comprise dans une plage cible, le calcul par la formule

$$R\% = S + (CR * (TRIF - TA))$$

$$RMIN \leq R\% \leq RMAX$$

(S = coefficient lié à la configuration de la machine de thermoformage (1) ; CR = coefficient concernant le type d'élément chauffant (8) ; RMIN et RMAX = valeurs de puissance minimale et maximale entre lesquelles la valeur de puissance R% doit se trouver)

d'une valeur de puissance calculée (R%) devant être appliquée à chacun desdits éléments chauffants (8) dans un cycle de chauffage subséquent.

**4.** Procédé de commande selon la revendication 1 ou 2 ou 3, dans lequel ladite création de ladite image thermique (IT) comprend le traitement de ladite image thermique (IT) de sorte qu'elle soit dans un format dimensionnel superposable sur ladite représentation graphique (RG).

**5.** Procédé de commande selon l'une des revendications 1 à 4, dans lequel, après ladite création, il est prévu la sauvegarde de ladite image thermique (IT) dans un dispositif de stockage inclus dans ladite machine de thermoformage (1).

**6.** Procédé de commande selon l'une des revendications 1 à 4, dans lequel, après ladite création, il est prévu la sauvegarde de ladite image thermique (IT) dans un système informatique en nuage.

**7.** Procédé de commande selon l'une des revendications 1 à 6, dans lequel ladite détection d'une valeur de température détectée (TA) comprend le calcul d'une valeur de température moyenne entre les valeurs de température détectées d'une pluralité de points d'échantillonnage contenus dans chaque zone respective dudit produit (2) chauffé par un élément chauffant respectif (8) .

**8.** Procédé de commande selon la revendication 3, ou selon l'une des revendications 4 à 7 lorsqu'elle est dépendante de la revendication 3, dans lequel ladite plage cible est égale à la température cible (TRIF) ± 3°C, en particulier ± 2°C.

**9.** Procédé de commande selon la revendication 3, ou selon l'une des revendications 4 à 7 lorsqu'elle est dépendante de la revendication 3, ou selon la revendication 8, dans lequel, sur la base de ladite différence de température calculée entre chacune desdites valeurs de température cibles (TRIF) et la valeur de température détectée respective (TA), il est prévu l'attribution d'une couleur différente à la représentation graphique (RG) desdits éléments chauffants (8).

**10.** Procédé de commande selon la revendication 1, dans lequel lesdits éléments chauffants (8) sont des résistances et ladite valeur de puissance (RI) est une valeur de pourcentage d'une fréquence de chacune desdites résistances.

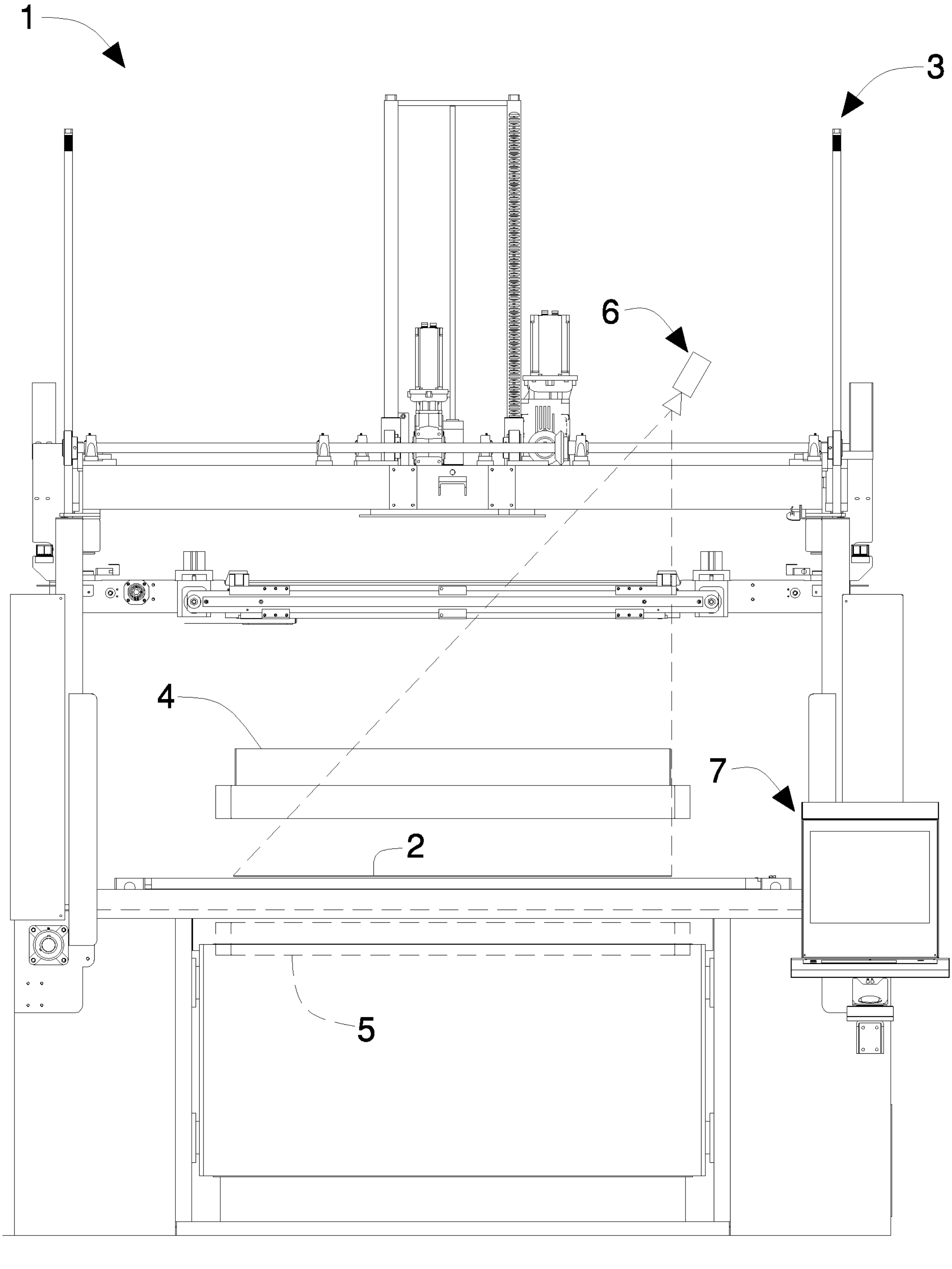


Fig. 1

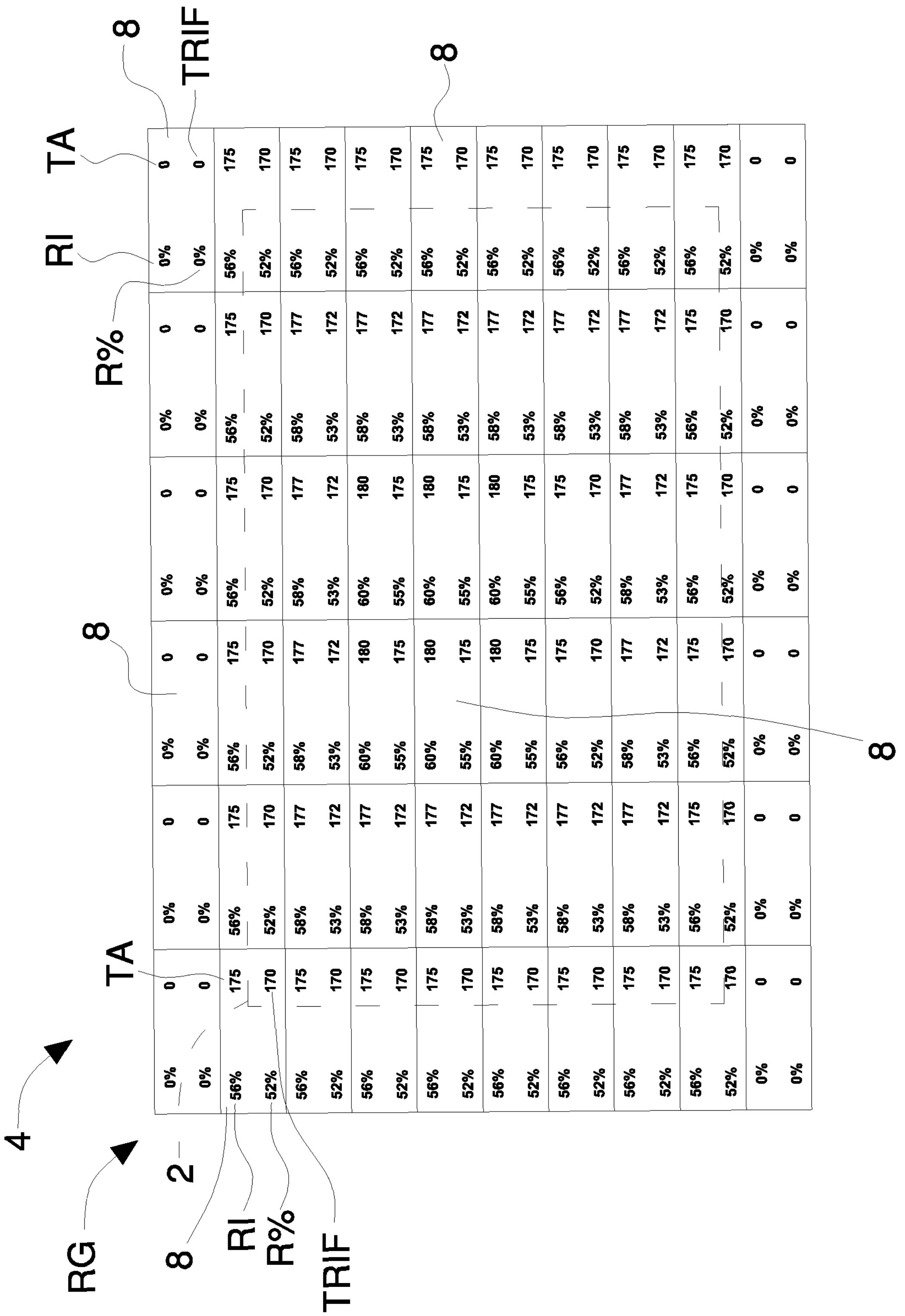


Fig. 2

Fig. 3

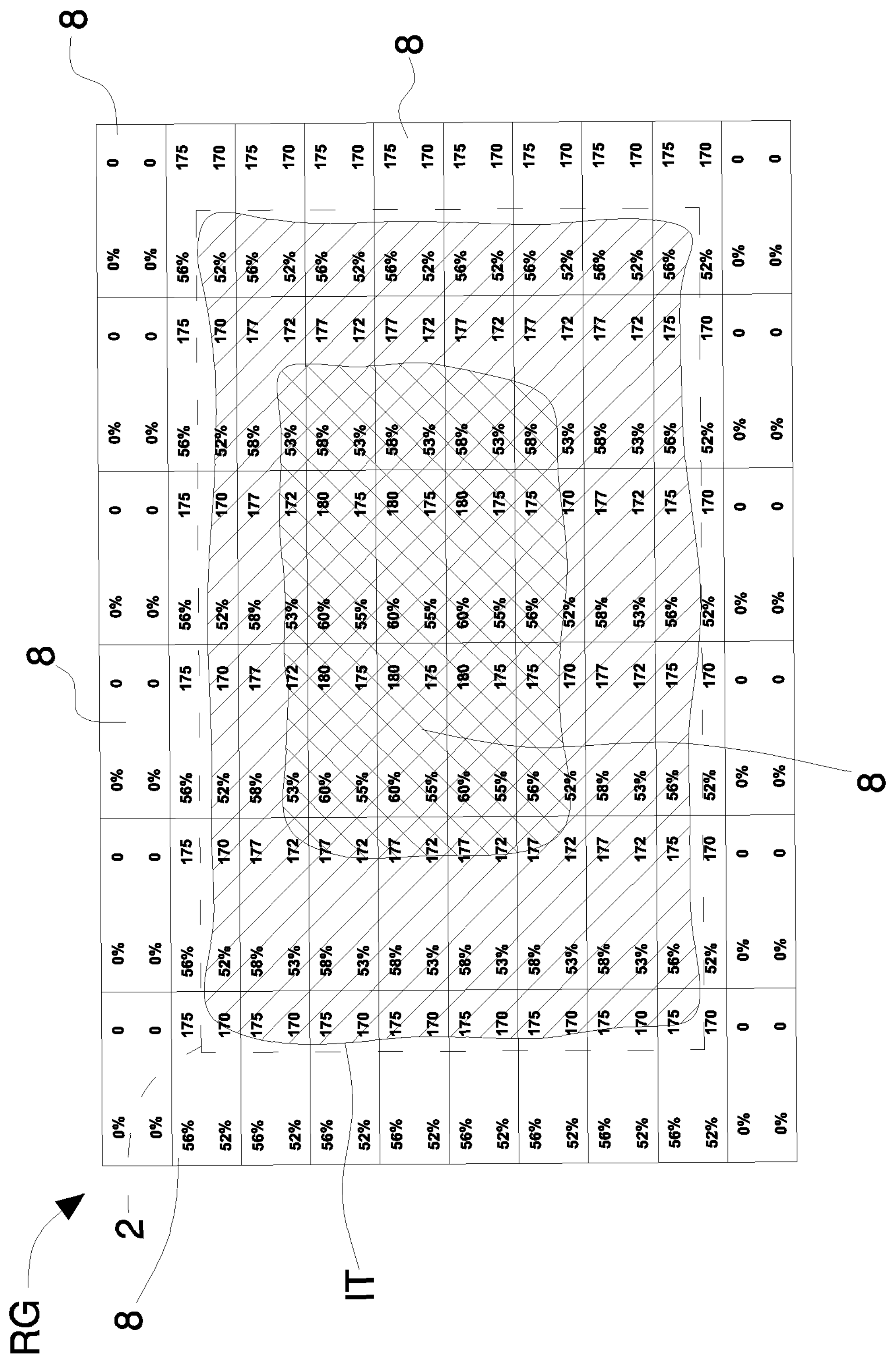

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015087341 A
- JP H10249930 A
- WO 2012140496 A1
- US 2010237544 A1
- US 2005243892 A1
- US 7317175 B2
- JP 2017195454 A